Europäisches Patentamt

(19) European Patent Office    (11) Publication number: **0 023 512**

Office européen des brevets    **B1**

(12)    **EUROPEAN PATENT SPECIFICATION**

(45) Date of publication of patent specification: **15.06.83**    (51) Int. Cl.³: **D 04 H 1/58, F 16 J 15/00, B 65 D 53/00**

(21) Application number: **80900376.7**

(22) Date of filing: **04.02.80**

(86) International application number:
**PCT/US80/00101**

(87) International publication number:
**WO 80/01576 07.08.80 Gazette 80/18**

(54) **SHEET MATERIAL CONTAINING EXFOLIATED VERMICULITE.**

(30) Priority: **05.02.79 US 9535**

(43) Date of publication of application:
**11.02.81 Bulletin 81/6**

(45) Publication of the grant of the patent:
**15.06.83 Bulletin 83/24**

(84) Designated Contracting States:
**FR**

(56) References cited:
**US - A - 2 175 715**
**US - A - 2 300 137**
**US - A - 2 538 236**
**US - A - 3 001 907**
**US - A - 3 074 834**
**US - A - 3 109 767**
**US - A - 3 434 917**
**US - A - 3 459 629**
**US - A - 3 533 907**
**US - A - 3 738 558**
**US - A - 4 035 215**
**US - A - 4 043 862**

(73) Proprietor: **HOLLINGSWORTH & VOSE COMPANY**
**112 Washington Street**
**East Walpole, MA 02032 (US)**

(72) Inventor: **FOSTER, Richard P.**
**34 Garden Parkway**
**Norwood, MA 02062 (US)**
Inventor: **BRODIN, Gregory C.**
**Four Cross Street**
**Foxboro, MA 02035 (US)**

(74) Representative: **Bayliss, Geoffrey Cyril**
**BOULT, WADE & TENNANT 27 Furnival Street**
**London EC4A 1PQ (GB)**

Courier Press, Leamington Spa, England

## Sheet material containing exfoliated vermiculite

This invention relates to flexible sheet material in the form of a fibrous web containing in combination a blend of exfoliated finely divided vermiculite with other asbestos-free finely divided inorganic fillers, organic fibers, and an organic binder, which sheet is useful as a heat resistant gasket having a unique combination of properties and which also can be used as heat insulation, and as a supporting medium for dehumidifiers and heat exchangers. The sheet is preferably a water-laid sheet and preferably contains fibrillatable organic fibers. The sheet material can also optionally contain synthetic inorganic fibers such as quartz, ceramic, glass or the like in addition to the organic fibers.

It has previously been proposed to provide a water-laid sheet of chemically exfoliated vermiculite and cellulose or polymeric or asbestos fibers, or montmorillonite clays, without any binder, as described in Kraus et al., U.S. Patent No. 3,434,917 issued March 25, 1969; such sheet material is said to have utility as high temperature insulation and electrical insulation, but it is deficient in wet crush strength, toughness, compressibility, and in other important properties, and is also difficult to manufacture. It has also been proposed in Kawam et al., U.S. Patent No. 3,533,907, granted October 13, 970 to make a thermal water-repellent insulation board as a water-laid sheet containing water-repellent asphalt coated heat-exfoliated vermiculite and cellulose or asbestos fibers along with a binding agent. The product has a very low density and high compressibility, so that it is completely unsuited for use as a gasket with respect to the sealing of fluids.

U.S. Patent 3,001,907 describes a fire-resistant low density board containing a mixture of 70 to 95 parts by weight of expanded vermiculite with 30 to 5 parts of vegetable fiber as a base, clay in the amount of 10% by weight of the base, and starch binder in the amount of up to 30% by weight of the base. U.S. Patent 4,043,862 describes a fire-resistant board containing incompletely expanded vermiculite in an amount from 40 to 90% by weight, clay in an amount from 5 to 20% by weight, and organic binder in an amount from 10 to 30% by weight.

It has now been found that flexible sheet material in the form of a bonded fibrous web containing organic fiber, organic binder, and a blend of finely divided exfoliated vermiculite with another asbestos-free inorganic finely divided particulate filler possesses a uniquely advantageous combination of properties rendering it particularly suitable as gasket material, for example, as gaskets in internal combustion engines and exhaust systems. The sheet material also is useful as heat insulation as, for example, for insulating mufflers and exhaust system components of internal combustion engines, as electrical insulation, and as support media for heat exchangers and dehumidifiers.

The vermiculite present in the sheet must be sufficiently small in particle size to pass a No. 80 screen, U.S. Standard (180 micrometers in diameter); preferably at least 90% by weight passes a No. 100 screen (150 micrometers in diameter) and up to 50% passes a No. 325 screen (45 micrometers in diameter). Particle size within the lower end of the range appears to help drying, which may be due to the reduction of interstitial pockets in the exfoliated particle of vermiculite, and also provides improved tensile strength and decreased water absorption of the sheet. Particles larger than those passing a No. 80 screen are unsatisfactory in that the finished sheet displays inferior crush resistance and water absorption characteristics. Vedrmiculite from any source may be used, although the best results have been obtained with vermiculite obtained from Enoree, South Carolina and from Libby, Montana. It must be exfoliated, preferably by heating to 1200°F (649°C) or more to remove irreversibly the bonded water between the platelets. The particle size can be reduced to within the desired range by shearing, either wet or dry, e.g., by conventional papermaking techniques as, for example, by passing an aqueous dispersion of the vermiculite through a beater, pulper, or refiner. The vermiculite is preferably free from any waterproofing agent such as asphalt before being added to the beater, pulper, or refiner.

The inorganic particulate asbestos-free filler blended with the vermiculite can be any of the many such fillers available, subject to the same restrictions on particle size as the vermiculite. Preferred filler particles include minerals such as mica, particularly sericite, limestone (calcium carbonate), and brucite (magnesium hydroxide). Other inorganic filler particles which can be used include, for example, barytes, pumice or volcanic ash, feldspar, various clays such as attapulgite, bentonite and kaolin as well as quaternized clays such as quaternized bentonite, glass microspheres, graphite, glass fiber particles, and other inorganic or mineral filler particles commonly used in the paper, rubber, and plastics industries. While talc and similar slippery or unctuous particulate fillers can be used in the blend with vermiculite, they are not preferred because they have an excessively deleterious effect upon the crush resistance of the finished sheet.

The amount of vermiculite present in the blend with other particulate filters ranges from 25 to 70% by weight of the total blend, preferably from 25 to 35%.

No asbestos fibers are necessary or desirable in the sheet material of the present invention both because of the carcinogenic properties of asbestos and because sheet materials made with asbestos display properties inferior to those of the sheet material of the present invention with respect to many of the important characteristics of gaskets as well as heat insulation and support media.

The larger the proportion of vermiculite in the blend with the inorganic particulate asbestos-free filler the higher the tensile strength and sealability characteristics of the finished sheet; in addition, in the case of a water-laid sheet, the less is the cling of the sheet to the wire on which it is formed and the less fill-in or blinding of the wire occurs. The lower the proportion of vermiculite in the blend, the better is the crush resistance and the lower are the water or antifreeze absorption and swelling characteristics of the finished sheet; in addition, in the case of a water-laid sheet, the higher is the production rate on the papermaking machine.

In the absence of vermiculite, the inorganic filler is incapable of producing the desired sealability and tensile strength unless the proportion of organic binder in the sheet is substantially increased; but this increases leads to an objectionable decrease in crush resistance and in torque retention (*i.e.* increased stress relaxation).

The fibrous web of the present invention retains its shape and effectiveness as a gasket and as heat insulation at very high temperatures even though most of the organic fibers and organic binder are destroyed at such temperatures. As electrical insulation, it displays good dielectric resistance and other electrical properties. It requires a low pressure for densification during manufacture, an important attribute in view of the necessity for the sheet material to have a density of at least 0.64 g per cubic centimeter in order to function satisfactorily as a gasket. The densified finished product exhibits superior sealing properties (ASTM F-37-68), toque loss or stress relaxation (ASTM F-38, Method B), and creep resistance properties (ASTM F-37-62 T) at elevated temperature, and tensile strength, as well as displaying superior self-release characteristics. A fibrous web in order to be useful as heat resistant gaskets must have a density of 0.64 to 1.92 g per cc, a tensile strength of at least 500 psi (35.2 Kg/cm²) (independent of machine direction) a compression of 7 to 50% and a recovery of 20 to 70% at 70.3 Kg/cm² (1,000 psi), a sealability of 30 cc/hr maximum at 500 psi (35.2 Kg/cm²), preferably from 5 to 30 cc/hr and a torque loss or stress relaxation of 50% maximum at 100°C (212°F), preferably from 5 to 40%. The fibrous web of the present invention displays all of the foregoing characteristics as well as desirable absorption and swelling characteristics. It is also desirable for many uses that it have a crush resistance from 5 to 70%.

The fibers employed in the fibrous web of the present invention can be of any of the organic fibers commonly employed in making water-laid fibrous webs or sheets such as cellulosic fibers including wood pulp, and a variety of synthetic organic fibers such as regenerated cellulose, acetate rayon, super-polyamide or nylon, poly ester, acrylics, phenolics, and aramides such as that sold under the Trade Mark KEVLAR. Particularly preferred are phenol-formaldehyde resin fibers such as those sold under the trade name NOVOLOID and fibrillatable organic fibers including the cellulosic fibers, the acrylic fibers and the aramides such as those sold under the Trade Mark KEVLAR. The amount of fiber in the sheet varies from 1 to 30% by weight of the total sheet except for binder, preferably from 5 to 20% by weight of the total sheet. The fiber length is not critical, but is preferably less than 64 mm (1/4 inch), any paper-making or web-forming fiber being satisfactory. It is also possible to include in the sheet as an optional material a small proportion, up to 25% by weight of the total sheet except for binder, of synthetic inorganic fibers which are relatively long, of the order of 32 to 127 mm (1/8 to 1/2 inch) in length, which provide reinforcement at very high temperatures, particularly in the case of sheet material to be used as heat insulation; however the presence of glass fibers has a deleterious effect on the sealing capability of the sheet as well as its liquid absorption properties and ease of densification, making it undesirable in sheet material to be used as a heat resistant gasket.

The binder used can be any of the usual organic binders employed in fibrous sheets or webs. A variety of such binders are in common use including such organic polymeric materials as styrene-butadiene rubber, acrylonitrile-butadiene rubber, acrylonitrile-butadiene-styrene copolymers, natural rubber, neoprene, poly-acrylates, polyvinylchloride and plasticized poly-vinylchloride, polyvinylidene chloride, poly-vinylacetate, ethylene vinylacetate copolymers phenolic resins, melamine formaldehyde resins, epoxy reins, polyurethanes, and the like. Most of such binders are film-forming materials. Blends of two or more binders can be used, and the usual additives or compounding agents may be employed along with the binder or as a part of it, such as vulcanizing agents, accelerators, catalysts, antioxidants, deposition aids, waterproofing aids, oleophobic materials, plasticizers and extenders, and the like. The amount of binder is not critical and varies from 3 to 30% by weight, preferably 5 to 20%, of the total weight of the remainder of the sheet, *i.e.* of the organic fibers and the blend of vermiculite and inorganic particulate asbestos-free filler.

When the fibrous web is wet-laid, which is preferred, the furnish can be supplied to the pulper and/or refiner and deposition chest at high consistency, of the order of 4 to 10%, and water removal at the wire and the wet presses is satisfactory, of the order of 40% to 50%.

Subjecting the furnish including fibrillatable fibers such as wood pulp to beating for a long time, tends to increase the density, strength, and flexibility of the finished sheet as well as improving its sealing capability and its fluid absorption characteristics. The binder is preferably introduced in the form of an aqueous dispersion or latex at any desired stage following the pulper, beater or refiner. Following web or sheet formation on the wire or on a cylinder, the sheet is dried, for example, on cans, and calendered to increase its density to at least 0.64 g per cc.

The following specific examples are intended to illustrate more fully the nature of the present invention without acting as a limitation upon its scope.

Examples

Twenty-one different furnishes having the composition set forth in the following table were prepared by mixing the ingredients in the specified proportions by weight for 1/4 to 1/2 hr. in a pulper, then forming a water-laid sheet on a Fourdrinier wire, can drying, and calendering to compress the sheet to the specified density. In each case, the binder including the various additives was introduced as a latex or aqueous dispersion in the usual manner, and the furnish was supplied to the head box at a consistency of 4%. In each case there was used a blend of vermiculite with one or more of calcium carbonate, sericite, magnesium hydroxide, clay, barytes, or mica. The amount of vermiculite in each case was 1/6, 1/3, 1/2, or 2/3 of the total blend, the remainder consisting of one or more of the foregoing fillers. There was also included in each case a blend containing 1/6 vermiculite for purpose of contrast. The vermiculite in every case was heat-exfoliated, its particle size varying somewhat with the length of time of beating or refining, but all of it passing 80-mesh screen (U.S. Standard). The particle size of the other filler in every case was small enough to pass 80 mesh screen, and more than 90% passed a 100 mesh screen.

|  | Parts by Weight |
|---|---|
| Kraft cellulose fibers (350 CSF) | 5.2 |
| Non-fusible synthetic organic fibers | 5.2 |
| Binder Phenolic resin | 1.5 |
| Acrylonitrile-butadiene copolymer, curing agents and antioxidant | 12.1 |
| Blend of vermiculite with six different inorganic asbestos-free fillers in varying proportions | 76 |

The significant physical properties of each sheet, after drying and densifying, were measured. The results are summarized in the following table in which there are listed the average values for all sheets classified according to the relative proportion of vermiculite in the blend. There are also included for comparative purposes the average values for controls containing only vermiculite and those containing only other fillers and no vermiculite. Similar results can be obtained using blends of vermiculite with other asbestos-free inorganic fillers.

| Proportion of Vermiculite in Blend | Tensile Strength psi (Kg/cm²) | Crush Resistance at 50,000 psi (3515 Kg/cm²) 300°F (149°C) antifreeze/ water % Extrusion | Sealability 500 psi (35.2 Kg/cm²) cc/hr leakage | Water Absorption 22 hr at RT % by weight | Torque Loss % | Water Content on Fourdrinier wire % by weight |
|---|---|---|---|---|---|---|
| 1/6 | 1213 (85.5) | 22.2 | 192 | 21.2 | 35.4 | 45.6 |
| 1/3 | 1482 (104.2) | 25.5 | 25.5 | 24.6 | 29.6 | 51.4 |
| 1/2 | 1429 (100.5) | 60.2 | 22.6 | 24.8 | 35.0 | 55.5 |
| 2/3 | 1879 (132.1) | 49.9 | 14.0 | 33.6 | 34.6 | 60.2 |
| Controls All Vermiculite | 2334 (164.1) | 105.6 | 13.1 | 37.6 | 35.6 | 63.6 |
| No Vermiculite | 1040 (73.1) | 12.0 | 345 | 13.5 | 31.4 | 37.7 |

All of the products (except the first in the above table) of the foregoing Examples were particularly useful as heat resistant gaskets and all were useful also for heat insulation, for heat resistant electrical insulation, and for a supporting medium for dehumidifiers and heat exchangers.

**Claims**

1. A fibrous web comprising organic fiber, organic binder, and a blend of exfoliated vermiculite free from asphalt, with another inorganic asbestos-free particulate filler, characterised in that said vermiculite is completely exfoliated, said blend has a particle size to pass a No. 80 screen (180 micrometers in diameter), the amount of said fiber being from 1 to 30% by weight and the amount of said blend being from 70 to 99% by weight, the amount of binder being from 3 to 30% by weight, all based on the total weight of fiber and blend, and the amount of vermiculite being from 25 to 70% by weight of said blend, said fibrous web having a density of 0.64 to 1.92 g per cc, a tensile strength of at least 35.2 kg/cm², a compression of 7 to 50% and a recovery of 20 to 70% at 70.3 kg/cm², a sealability of 30 cc/hr maximum at 35.2 kg/cm², and a stress relaxation of 50% maximum at 100°C.

2. A fibrous web as claimed in claim 1 in which the amount of vermiculite is from 25 to 35% by weight of said blend.

3. A fibrous web as claimed in claims 1 or 2 in which the amount of said organic fiber is from 5 to 20% by weight and the amount of said binder is from 5 to 20% by weight.

4. A fibrous web as claimed in claim 2 in which the amount of said organic fiber is from 5 to 20% by weight and the amount of said binder is from 5 to 20% by weight, said sheet material having a sealability of from 5 cc/hr to 30 cc/hr at 35.2 Kg/cm² (500 psi) and a stress relaxation from 5 to 40% at 100°C, suitable for use as a heat resistant gasket.

5. A fibrous web as claimed in claim 4 having a crush resistance from 5 to 70%.

**Revendications**

1. Toile ou nappe fibreuse comprenant des fibres organiques, un liant organique et un mélange de vermiculite exfoliée sans asphalte avec une autre charge minérale en particules sans amiante, caractérisée en ce que la vermiculite est totalement exfoliée et les particules du mélange passent au tamis No. 80 à mailles de 180 microns d'ouverture, la proportion des fibres étant de 1 à 30% en poids et celle du mélange de 70 à 99% en poids, la proportion du liant étant de 3 à 30% en poids, tous ces pourcentages étant rapportés au poids total des fibres et du mélange, et la proportion de vermiculite étant de 25 à 70% du poids du mélange, nappe fibreuse qui a une masse volumique de 0,64 à 1,92 g/cm³, une résistance à la traction d'au moins 35 bars, une compression de 7 à 50% et une récupération de 20 à 70% à 70 bars, un pouvoir d'obturation (étanchéification) ne permettant pas une fuite de plus de 30 cm³ par heure à 35 bars, et un relâchement de contrainte ne dépassant pas 50% à 100°C.

2. Nappe fibreuse selon la revendication 1 dans laquelle la proportion de vermiculite est de 25 à 30% du poids du mélange.

3. Nappe fibreuse selon la revendication 1 ou 2 dans laquelle la proportion des fibres organiques est de 5 à 20% en poids et la proportion du liant de 5 à 20% en poids également.

4. Nappe fibreuse selon la revendication 2 dans laquelle la proportion des fibres organiques est de 5 à 20% en poids et celle du liant de 5 à 20% en poids, ce matériau en feuille ayant un pouvoir d'étanchéification qui correspond à une fuite de 5 cm³/h à 30 cm³/h à 35 bars et un relâchement de contrainte de 5 à 40% à la température de 100°C, et convenant pour l'emploi comme joints résistant bien à la chaleur.

5. Nappe fibreuse selon la revendication 4, dont la résistance à l'écrasement est de 5 à 70%.

**Patentansprüche**

1. Faserbahn, enthaltend organische Fasern, organischen Binder und eine Mischung aus asphaltfreiem, aufgeblättertem Vermikulit mit anderem anorganischem asbestfreiem, teilchenförmigem Füllmaterial, dadurch gekennzeichnet, daß der Vermikulit vollständig aufgeblättert ist, die Mischung eine Teilchengröße hat, die von einem No. 80-Sieb durchgelassen wird (180 $\mu$m Durchmesser), daß die Menge der Faser 1 bis 30 Gewichts-%, die Menge der Mischung 70 bis 99 Gewichts-% und die Menge des Binders 3 bis 30 Gewichts-%, sämtlich bezogen auf das Gesamtgewicht von Faser und Mischung, und daß die Menge des Vermikulits 25 bis 70 Gewichts-% der Mischung beträgt und daß die Faserbahn eine Dichte von 0,64 bis 1,92 g/cm³ eine Zugfestigkeit von mindestens 35,2 kg/cm², eine Kompression von 7 bis 50% und eine Erholung von 20 bis 70% bei 70,3 kg/cm², ein Dichtungsvermögen von 30 cm³/Std. Höchstdurchlässigkeit bei 35,2 kg/cm², und eine Spannungsrelaxation von maximal 50% bei 100°C aufweist.

2. Faserbahn nach Anspruch 1, dadurch gekennzeichnet, daß die Menge des Vermikulits 25 bis 35 Gewichts-% der Mischung beträgt.

3. Faserbahn nach Anspruch 1 oder 2, dadurch gekennzeichnet, daß die Menge der organischen Faser 5 bis 20 Gewichts-% und die Menge des Binders 5 bis 20 Gewichts-% beträgt.

4. Faserbahn nach Anspruch 2, dadurch gekennzeichnet, daß die Menge der organischen Faser 5 bis 20 Gewichts-% und die Menge des Binders 5 bis 20 Gewichts-% beträgt, daß das Plattenmaterial ein Dichtvermögen von 5 cm³/Std. bis 30 cm³/Std. bei 35,2 kg/cm² (500 psi) und eine Spannungsrelaxation von 5 bis 40% bei 100°C aufweist und als hitzebeständige Dichtungseinlage geeignet ist.

5. Faserbahn nach Anspruch 4, dadurch gekennzeichnet, daß sie eine Bruchbeständigkeit von 5 bis 70% aufweist.